# NEUE EUROPÄISCHE PATENTSCHRIFT

(11) **EP 0 252 251 B2**
(45) Veröffentlichungstag und Bekanntmachung des Hinweises auf die Entscheidung über den Einspruch: **05.04.1995**
(45) Hinweis auf die Patenterteilung: 07.03.1990
(21) Anmeldenummer: 87107061.1
(22) Anmeldetag: 15.05.1987
(51) Int. Cl.: D21G 1/02, F16C 13/00

(54) **Hydrostatisches Stützelement**
Hydrostatic supporting element
Elément d'appui hydrostatique

(30) Priorität: 08.07.1986 CH 2747/86
(43) Veröffentlichungstag der Anmeldung: 13.01.1988
(73) Patentinhaber: Sulzer - Escher Wyss AG, CH-8023 Zürich (CH)
(72) Erfinder: Lehmann, Rolf, CH-8964 Rudolfstetten (CH)
(74) Vertreter: Finsterwald, Manfred, Dipl.-Ing., Dipl.-Wirtsch.-Ing.

(56) Entgegenhaltungen:
- DE-B- 1 193 792
- FR-A- 2 334 003
- FR-A- 2 340 470
- FR-A- 2 356 045
- Kugellager-Zeitschrift Nr. 190 (1976), S. 1 - 9, Bilder 4, 5, 8, "Hydrostatische Segmentlager lassen beliebig grosse Durchmesser zu!"

## Beschreibung

Die Erfindung betrifft ein hydrostatisches Stützelement mit einer Zylinder-Kolben-Vorrichtung zur Bildung einer hydrostatischen Anpresskraft eines Lagerschuhes mit hydrostatischer Schmierung, dessen wirksame Lagerfläche grösser ist als die wirksame Druckfläche des Kolbens, mit einer Zufuhr von hydraulischem Mittel an die Zylinder-Kolben-Vorrichtung und den Lagerschuh, wobei die Zylinder-Kolben-Vorrichtung und der Lagerschuh an getrennte Speiseleitungen angeschlossen sind.

Solche, z.B. aus DE 1 193 792; FR 2 334 003, FR 2 356 045 oder FR 2 340 470, bekannten Stützelemente arbeiten bei vielen Anwendungen, insbesondere bei niedrigen Druckkräften völlig befriedigend. Bei grösseren Druckkräften, wie sie z.B. beim Walzen von Metall auftreten, ist jedoch der Energieverbrauch unerwünscht hoch.

Die Erfindung hat das Ziel, ein hydrostatisches Stützelement zu schaffen, welches insbesondere bei höheren Druckkräften einen niedrigeren Energieverbrauch hat.

Dieses Ziel wird dadurch erreicht, dass in den Speiseleitungen eine Druckpumpe zur Bildung der Anpresskraft und eine Lagerpumpe zur Schmierung der Lagerfläche vorgesehen sind, wobei der Druck der Druckpumpe grösser ist als der Druck der Lagerpumpe, während umgekehrt die Lagerpumpe eine grössere Fördermenge liefert als die Druckpumpe, und dass die Lagerpumpe eine volumetrische Pumpe mit konstanter Fördermenge pro Zeiteinheit ist, während die Druckpumpe eine Pumpe mit konstantem Förderdruck ist, wobei die Druckpumpe mit der Lagerpumpe derart verbunden ist, daß ihre Saugleitung an die Förderleitung der Lagerpumpe angeschlossen ist.

Durch die Trennung der Speisung der Zylinder-Kolben-Vorrichtung und des Lagerschuhes wird erreicht, dass für die erzeugende Kraft eine Hochdruckpumpe mit z.B. 600 bar eingesetzt werden kann, die jedoch einen kleinen Energiebedarf hat. Da der Leistungsbedarf einer Pumpe proportional dem Produkt aus Pumpendruck und Volumenstrom ist, geht die Leistung gegen Null, wenn der Volumenstrom gegen Null geht.

Die Lagerpumpe hat demgegenüber einen grossen Volumenstrom. Der Druck auf der Lageroberseite stellt sich dabei automatisch ein, da der Kolben sich im Zylinder solange bewegt, bis die Kräfte, welche auf die Lagerfläche wirken, gleich gross sind wie die Kräfte, die auf den Kolben wirken. Ist die Fläche des Lagers doppelt so gross wie die des Kolbens, ist der Druck auf den Lagerschuh etwa halb so gross wie der Druck in der Kolben-Zylinder-Vorrichtung.

Somit ist bei einer grossen Tragkraft der Vorrichtung der Druck im Lagerschuh ungefähr halb so gross wie in der Kolben-Zylinder-Vorrichtung. Somit ist die Pumpenleistung etwa halb so gross, verglichen mit dem Fall, wo der Zylinderraum mit dem Lagerschuh durch Drosselbohrungen verbunden wäre.

Da sich der Druck der Lagerpumpe im Verhältnis der Flächen des Kolbens und des Lagerschuhes einstellt, z.B. 1:2, erhält die Druckpumpe dadurch einen Vordruck, der etwa dem halben Druck der Zylinder-Kolben-Vorrichtung entspricht. Es sind daher z.B. die erwähnten 600 bar im Zylinderraum durch eine Pumpe mit ungefähr halbem Druck zu erreichen.

Durch die Massnahme nach Anspruch 4 wird erreicht, dass in einer Abstützvorrichtung mit nebeneinander angeordneten Stützelementen jeder Lagerschuh die gleiche Menge des von einer gemeinsamen Pumpe gelieferten Oeles bekommt. Eine derartige Anordnung besteht z.B. bei Durchbiegungseinstellwalzen.

Die Erfindung wird anhand der Zeichnung erläutert.

Es zeigt:
Fig.1 einen schematischen Schnitt einer Walze mit dem erfindungsgemässen Stützelement und
Fig.2 die Schaltung der Pumpen bei mehreren nebeneinander angeordneten Stützelementen.

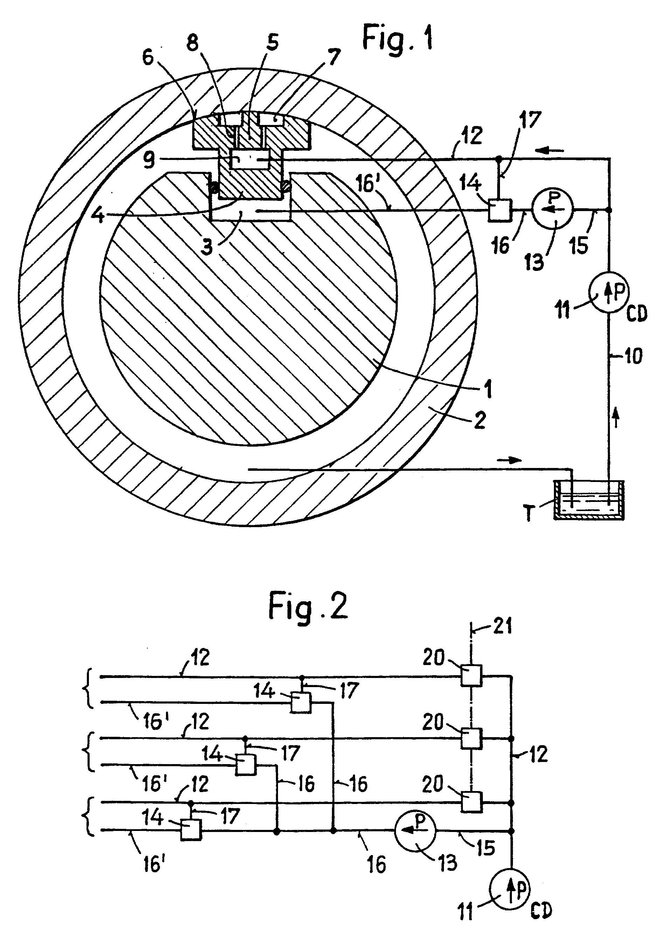

In der Figur 1 der Zeichnung ist eine Durchbiegungseinstellwalze mit einem Träger 1 und einem Walzenmantel 2 dargestellt. Im Träger 1 sind Bohrungen 3 ausgebildet, in welchen jeweils ein Kolben 4 dichtend und neigbar geführt ist. Der Kolben 4 ist mit einem Lagerschuh 5 verbunden, welcher eine Lagerfläche 6 mit hydrostatischen Stabilisierungstaschen 7 aufweist. Die Stabilisierungstaschen 7 sind durch Drosselbohrungen 8 mit einem Raum 9 verbunden, der sich zwischen dem Kolben 4 und dem Lagerschuh 5 befindet.

Die Speisung erfolgt aus dem Behälter T durch eine Pumpe 11 mit konstanten Volumenstrom durch eine Leitung 12, welche in den Raum 9 führt. Von dort gelangt das Oel durch die Drosselbohrungen 8 in die hydrostatischen Taschen 7 und bildet eine hydrostatische Schmierung der Lagenfläche 6 wie sie auch im US-Patent 3 802 044 beschrieben ist. Die Zylinder-Kolben-Vorrichtung 3,4 wird von einer Pumpe 13 gespeist, deren Druck durch einen Regler 14 konstant gehalten wird. Die Pumpe 13 ist über eine Leitung 15 an die Leitung 12 angeschlossen, die in den Raum 9 führt. Die Ueberlaufleitung 17 des Druckreglers 14 mündet ebenfalls in die Leitung 12. Die Leitung von der Pumpe 13 zum Regler 14 ist mit 16 bezeichnet, vom Regler 14 zum Zylinder 3 mit 16'.

Im Betrieb stellt sich der Druck der Lagerpumpe 11 zur Schmierung der hydrostatischen Lagerung je nach der Belastung auf einen Wert ein, der durch die geometrischen Verhältnisse und den Druck der Pumpe 13 gegeben ist. Der Druck, der sich im Raum 9 einstellt, ist jedoch immer kleiner als der Druck im Zylinderraum 3, da die Lagerfläche 6 grösser ist als die Fläche des Kolbens 4 und z.B. das Doppelte dieser Fläche beträgt.

Die Druckpumpe 13 erhält das Drucköl bereits mit einem Ueberdruck gegeniber der Atmosphäre und erhöht ihn um einen durch den Regler gegebenen Wert.

Die Figur 2 zeigt die Schaltung bei mehreren nebeneinander angeordneten hydrostatischen Stützelementen einer Durchbiegungseinstellwalze, wobei einander entsprechende Teile aus der Figur 1 mit gleichen Bezugszeichen bezeichnet sind. Neu sind einzig Volumenteiler 20, welche gewährleisten, dass von der Pumpe 11 alle Lagerschuhe 5 die gleiche Oelmenge pro Zeiteinheit erhalten.

Es handelt sich dabei z.B. um Zahnradpumpen 20, die durch eine Welle 21 miteinander verbunden sind und auch angetrieben sein können.

Die Ueberlaufleitungen 17 der Regler 14 führen vorzugsweise in die Leitungen 12 zurück. Es ist jedoch auch eine Rückführung des überlaufenden Oeles direkt in den Behälter T denkbar.

In der Figur 1 wurde stellvertretend eine Variante des Stützelementes mit einer Zylinderbohrung 3 im Träger 1, beweglichem Kolben 4 und mit diesem verbundenen Lagerschuh 5 dargestellt. Es gibt jedoch verschiedene Ausführungsformen der hydrostatischen Stützelemente, an welche die Erfindung anwendbar ist, z.B. die, welche in der erwähnten US-Patentschrift 3 802 044 dargestellt sind und weitere.

## Patentansprüche

1. Hydrostatisches Stützelement mit einer Zylinder-Kolben-Vorrichtung (3, 4) zur Bildung einer hydrostatischen Anpresskraft eines Lagerschuhes (5) mit hydrostatischer Schmierung, dessen wirksame Lagerfläche (6) grösser ist als die wirksame Druckfläche des Kolbens (4), mit einer Zufuhr von hydraulischem Mittel an die Zylinder-Kolben-Vorrichtung und den Lagerschuh (5), wobei die Zylinder-Kolben-Vorrichtung (3, 4) und der Lagerschuh (5) an getrennte Speiseleitungen (12, 16) angeschlossen sind, dadurch gekennzeichnet, dass in den Speiseleitungen (12, 16) eine Druckpumpe (13) zur Bildung der Anpresskraft und eine Lagerpumpe (11) zur Schmierung der Lagerfläche vorgesehen sind, wobei der Druck der Druckpumpe (13) grösser ist als der Druck der Lagerpumpe (11), während umgekehrt die Lagerpumpe (11) eine grössere Fördermenge liefert als die Druckpumpe (13), und dass die Lagerpumpe (11) eine volumetrische Pumpe mit konstanter Fördermenge pro Zeiteinheit ist, während die Druckpumpe (13) eine Pumpe mit konstantem Förderdruck ist, wobei die Druckpumpe (13) mit der Lagerpumpe (11) derart verbunden ist, dass ihre Saugleitung (15) an die Förderleitung (12) der Lagerpumpe (11) angeschlossen ist.

2. Hydrostatisches Stützelement nach Anspruch 1, dadurch gekennzeichnet, dass die Druckpumpe (13) mit einem Druckregler (14) versehen ist.

3. Hydrostatisches Stützelement nach Anspruch 1, dadurch gekennzeichnet, dass die Ueberlaufleitung, (7) des Druckreglers (14) ebenfalls an die Förderleitung (12) der Lagerpumpe (11) angeschlossen ist.

4. Abstützvorrichtung mit mehreren nebeneinander angeordneten Stützelementen (4, 5) nach einem der Ansprüche 1 bis 3, dadurch gekennzeichnet, dass zwischen der für die Stützelemente gemeinsamen Lagerpumpe (11) und den einzelnen Lagerschuhen (5) Volumenteiler (20; 21) angeordnet sind, welche jedem Lagerschuh eine vorgegebene Fördermenge pro Zeiteinheit zuführen.

5. Abstützvorrichtung nach Anspruch 4, dadurch gekennzeichnet dass die Volumenteiler (20, 21) ausgebildet sind, den einzelnen Lagerschuhen (5) die gleiche Fördermenge pro Zeiteinheit zuzuführen.

6. Abstützvorrichtung nach Anspruch 4 oder 5, dadurch gekennzeichnet, dass für die Zylinder-Kolben-Vorrichtung (3,4) der einzelnen Stützelemente (4,5) eine gemeinsame Druckpumpe (13) vorgesehen ist.

7. Abstützvorrichtung nach Anspruch 6, dadurch gekennzeichnet, dass an die gemeinsame Druckpumpe (13) für jedes Stützelement (4) ein getrennter Druckregler (14) angeschlossen ist.

## Claims

1. Hydrostatic support unit with a cylinder-piston device (3, 4) for producing a hydrostatic contact force of a bearing shoe (5) with hydrostatic lubrication, the effective bearing surface (6) of which shoe is greater than the effective thrust surface of the piston (4), in which fluid medium is supplied to the cylinder-piston device and the bearing shoe (5), the cylinder-piston device (3, 4) and the bearing shoe (5) being joined to separate feed pipes (12, 16), characterised in that a force pump (13) for producing the contact force and a bearing pump (11) for lubricating the bearing surface are provided in the feed pipes (12, 16), the pressure of the force pump (13) being greater than the pressure of the bearing pump (11), while on the other hand the bearing pump (11) delivers a greater quantity than the force pump (13), and that the bearing pump (11) is a volumetric pump delivering a constant quantity per unit of time, while the force pump (13) has a constant delivery pressure, the force pump (13) being connected to the bearing pump (11) such that its suction pipe (15) is joined to the delivery pipe (12) of the bearing pump (11).

2. Hydrostatic support unit according to claim 1, characterised in that the force pump (13) is provided with a pressure regulator (14).

3. Hydrostatic support unit according to claim 1, characterised in that the overflow pipe (17) of the pressure regulator (14) is also joined to the delivery pipe (12) of the bearing pump (11).

4. Support device with a plurality of adjacent support units (4, 5) according to one of claims 1 to 3, characterised in that volume dividers (20, 21) are arranged between the bearing pump (11), which is common to the support units, and the individual bearing shoes (5), which volume dividers supply each bearing shoe with a predetermined delivery quantity per unit of time.

5. Support device according to claim 4, characterised in that the volume dividers (20, 21) are formed to supply the individual bearing shoes (5) with the same delivery quantity per unit of time.

6. Support device according to claim 4 or 5, characterised in that a common force pump (13) is provided for the cylinder-piston device (3, 4) of the individual support units (4, 5).

7. Support device according to claim 6, characterised in that a separate pressure regulator (14) is joined to the common force pump (13) for each support unit (4).

## Revendications

1. Elément d'appui hydrostatique, comportant un système à cylindre et piston (3, 4), destiné à créer une pression d'appui hydrostatique d'un sabot de palier (5) à graissage hydrostatique, dont la surface active de palier (6) est plus grande que la surface active de pression du piston (4), comportant une conduite d'arrivée de fluide hydraulique pour le système à cylindre et piston et pour le sabot de palier (5), le système à cylindre et piston (3, 4) et le sabot de palier (5) étant raccordés à des conduites d'alimentation séparées (12, 16) caractérisé en ce qu'il est prévu, dans le circuit des conduites d'alimentation (12, 16), une pompe de pression (13), destinée à créer la pression d'appui, ainsi qu'une pompe de palier (11), destinée au graissage de la surface de palier, cependant que la pression de la pompe de pression (13) est plus grande que celle de la pompe de palier (11), tandis qu'inversement la pompe de palier (11) a un débit plus grand que celui de la pompe de pression (13) et que la pompe de palier (11) est une pompe volumétrique à débit constant par unité de temps, tandis que la pompe de pression (13) est une pompe à pression constante de refoulement, la pompe de pression (13) étant reliée à la pompe de palier (11) de telle manière que sa conduite d'aspiration (15) est raccordée à la conduite de refoulement (12) de la pompe de palier (11).

2. Elément d'appui hydrostatique suivant la revendication 1, caractérisé en ce que la pompe de pression (13) est munie d'un régulateur de pression (14).

3. Elément d'appui hydrostatique suivant la revendication 1, caractérisé en ce que la conduite de trop-plein (17) du régulateur de pression (14) est raccordée aussi à la conduite de refoulement (12) de la pompe de palier (11).

4. Dispositif d'appui comportant plusieurs éléments d'appui (4, 5) placés les uns à côté des autres, suivant une des revendications 1 à 3, caractérisé en ce qu'entre la pompe de palier (11) commune aux éléments d'appui et les différents sabots de palier (5) se trouvent des diviseurs de débit (20, 21) qui fournissent, à chaque sabot de palier, un débit déterminé à l'avance par unité de temps.

5. Dispositif d'appui suivant la revendication 4, caractérisé en ce que les diviseurs de débit (20, 21) sont conçus de manière à fournir aux différents sabots de palier (5) le même débit par unité de temps.

6. Dispositif d'appui suivant la revendication 4 ou 5, caractérisé en ce que, pour le système à cylindre et piston (3, 4) des différents éléments d'appui (4, 5), il est prévu une pompe de pression commune (13).

7. Dispositif d'appui suivant la revendication 6, caractérisé en ce qu'à la pompe de pression commune (13), il est raccordé, pour chaque élément d'appui (4), un régulateur de pression séparé (14).
